# EUROPEAN PATENT APPLICATION

(11) **EP 4 525 082 A1**
(43) Date of publication of application: **19.03.2025**
(21) Application number: 23939996.7
(22) Date of filing: 30.06.2023
(51) Int. Cl.: H01M 4/36, H01M 4/525, H01M 4/62

(54) **LITHIUM ION BATTERY POSITIVE ELECTRODE MATERIAL AND PREPARATION METHOD THEREFOR AND LITHIUM ION BATTERY**

(71) Applicant: Beijing Easpring Material Technology Co., Ltd., Beijing 100160 (CN); Jiangsu Easpring Material Technology Co., Ltd., Linjiang New District, Haimen District Nantong, Jiangsu 226133 (CN)
(72) Inventor: LIU, Yun, Beijing 100160 (CN); WANG, Jingpeng, Beijing 100160 (CN); WANG, Yaqi, Beijing 100160 (CN); ZHANG, Hang, Beijing 100160 (CN); ZHANG, Xuequan, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2023/104894
(87) International publication number: WO 2025/000475

(57) **Abstract**

The present application relates to the field of lithium-ion batteries and discloses a lithium-ion battery cathode material, a preparation method thereof, and a lithium-ion battery. A ratio of surface Ni³⁺ content of the cathode material to internal Ni³⁺ content of the cathode material is (0.95 to 1): 1, and a content of disordering nickel in the cathode material is less than or equal to 3%. The lithium-ion battery cathode material has the similar surface Ni³⁺ content and internal Ni³⁺ content, and has a low content of disordering nickel, thereby avoiding the generation of a NiO passivation layer in the cathode material and reducing the phenomenon of loss of surface active lithium. The lithium-ion battery containing such a cathode material has improved capacity, rate capacity, and cycle performance.

## Description

### FIELD

The present disclosure relates to the technical field of lithium-ion batteries, and specifically, relates to a lithium-ion battery cathode material, a preparation method thereof, and a lithium-ion battery.

### BACKGROUND

In recent years, with the increasingly intensified oil and energy crisis and environmental pollution, global electric vehicles (EVs) have developed rapidly as an alternative to traditional cars in new racetracks. At the same time, the performance requirements of electric vehicles for high energy density and long cycle life of the power batteries mounted on the electric vehicles are also increasing.

As the most cost-effective and performance-affecting part of the battery, the cathode materials have been widely developed and applied in lithium-ion power battery systems, among which layered nickel-cobalt-manganese-lithium aluminate multi-element materials have high specific capacity and stability and thus have great development potential. In order to meet the increasingly urgent need for high energy density and safety, increasing the Ni content in multi-element materials to improve the energy density, and combining with doping and coating means to control the rate and cycle performance of materials have become common choices for the market and researchers.

With the continuous progress of high nickelization, the conventional wet coating method may easily lead to the loss of surface active lithium, and an electrochemically active passivation layer may be formed by the contact between the material and water, which increases the material resistance and affects the energy density and rate capacity. In addition, the water washing process requires complicated process and is affected by various factors, and the filtrate recovery requires high cost. Therefore, more and more studies have turned to the dry coating process of high nickel materials, which not only can effectively avoid the above problems but has a simple preparation process, low cost, high consistency, and repeatability. For example, CN106784675A provides a dry coating method for a cathode material of a lithium battery. The coating material is pre-mixed with boric acid, then mixed with a primary sintered material and sintered, to obtain a final cathode material. During such a process, the coating material can fully contact to form a solid melt, the coating effect is uniform, the bonding is tight after sintering, and the coating layer is not easy to fall off. This method not only shortens the production cycle but also ensures the uniformity of coating, allowing the coating material to form an ideal glassy coating under high temperature, thereby improving the stability of the material.

However, the direct dry coating of primary sintered materials still faces many challenges. One of the most important problems is that the specific surface area and porosity of the primary sintered materials cannot be opened without water washing, and then the specific surface area of the particles coated later further reduces the pores and filling the pores, resulting in a great difference in the specific surface area between the dry coated products and the wet coated products. The small specific surface area and porosity can reduce the contact surface between material and electrolyte and affect the mass transfer process of lithium ions, thereby affecting the discharge capacity and rate capacity.

Therefore, it is important to provide a cathode material with a uniform coating effect, suitable specific surface area and porosity, no passivation layer, high energy density, and good rate capacity.

### SUMMARY

An object of the present disclosure is to overcome the problems in the related art, i.e., the cathode material cannot meet the practical requirements due to the loss of surface active lithium of the cathode material caused by a water washing step of the conventional wet coating and due to the presence of a NiO passivation layer on the surface of the cathode material. The present disclosure provides a lithium-ion battery cathode material and a preparation method thereof. The lithium-ion battery cathode material has similar surface Ni³⁺ content and internal Ni³⁺ content and has a low content of disordering nickel, thereby avoiding the formation of a NiO passivation layer in the cathode material and reducing the loss of surface active lithium. In this way, a lithium-ion battery including the cathode material has improved capacity, rate capacity, and cycle performance.

In order to achieve the above-mentioned object, a first aspect of the present disclosure provides a lithium-ion battery cathode material. A ratio of surface Ni³⁺ content of the cathode material to internal Ni³⁺ content of the cathode material is (0.95 to 1): 1, and a content of disordering nickel in the cathode material is less than or equal to 3%.

A second aspect of the present disclosure provides a method for preparing a lithium-ion battery cathode material, the method includes: S1, mixing a cathode material precursor, a lithium source, and optionally a dopant, performing primary sintering under a first oxygen-containing atmosphere, and performing cooling, crushing, and sieving, to obtain a primary sintered material; and S2, mixing the primary sintered material with a coating agent, performing secondary sintering under a second oxygen-containing atmosphere, and performing sieving and iron removing, to obtain the lithium-ion battery cathode material. The second oxygen-containing atmosphere has an oxygen concentration greater than or equal to 90 vol%.

A third aspect of the present disclosure provides a lithium-ion battery cathode material prepared by the above-mentioned method.

A fourth aspect of the present disclosure provides a lithium-ion battery including the lithium-ion battery cathode material described above.

With the above-mentioned technical solutions, the lithium-ion battery cathode material provided by the present disclosure, the preparation method thereof, and the lithium-ion battery have the following beneficial effects.

The lithium-ion battery cathode material has similar surface Ni³⁺ content and internal Ni³⁺ content and has a low content of disordering nickel, thereby avoiding the formation of a NiO passivation layer in the cathode material and reducing the loss of surface active lithium. In this way, a lithium-ion battery including the cathode material has improved capacity, rate capacity, and cycle performance.

Further, the lithium-ion battery cathode material provided by the present disclosure has a specific porosity. Thus, the surface of the cathode material, even when having a coating layer thereon, can still maintain a loose and porous structure, indicating that the coating layer is in uniform contact with the surface of the material. Therefore, there are many reaction sites, and no partial enrichment of the coating layer on the surface, which are beneficial for reducing the resistance of the cathode material and improving the cycle performance of the lithium-ion battery including the cathode material. In addition, the specific porosity enables the material to be adequately wetted of by the electrolyte, thereby releasing higher first cycle charge-discharge efficiency and rate capacity.

Further, the material has a specific porosity distribution. Specifically, an inner core of the cathode material has a low porosity and a shell layer of the cathode material has a high porosity. A dense structure of the inner core having a lower porosity is conducive to enhancing the fracture strength of the cathode material, while the shell layer having a higher porosity can ensure the coating effect and the electrolyte wetting effect. In addition, microcracking and pulverization are more likely to occur in the shell layer during charging and discharging process, and the higher porosity in the shell layer can provide space for expansion and contraction of the crystal cell volume during charging and discharging process, thereby releasing stress and prolonging the cycle life of the lithium-ion battery including the cathode material.

Further, the lithium-ion battery cathode material provided by the present disclosure has primary particles in a specific arrangement state. By adjusting the arrangement state of the primary particles of the material through combined doping, the primary particles are in a radial pattern at least in the shell layer (different doping may also extend into the inner core). The ordered arrangement can effectively alleviate the extrusion and cracking caused by the expansion and contraction of grains with different crystal plane orientations in different directions, improving the cycle performance of the lithium-ion battery including the cathode material.

Further, the lithium-ion battery cathode material provided by the present disclosure has a suitable grain boundary density. In the present method, by regulating the core-shell structure of the material through combined doping, a different grain boundary density can be obtained. In the shell layer, lithium deintercalation of the primary particles is more frequent and the primary particles are sufficiently contact with the electrolyte, such that microcracks are easily formed and developed during cycling and further lead to surface pulverization. A smaller grain boundary density can therefore reduce the formation and development of microcracks at the grain boundaries. At the inner core, the primary particles are relatively less in contact with the electrolyte, and the higher interface density provides channels for lithium-ion diffusion, thereby resulting in higher capacity and better rate capacity. The different grain boundary densities in the core-shell structure of the cathode material of the present disclosure allow the high capacity and long cycling of the material to be true.

In the method for preparing a lithium-ion battery cathode material provided by the present disclosure, in an atmosphere with a high oxygen concentration, the formation of an inactive passivation layer, which is attributed to delithiation occurred when a surface of a high nickel ternary material is in contact with water during the conventional water washing process, can be avoided by using a dry coating method. Thus, the same structure of the surface and the bulk phase and the trivalent active nickel content can be remained to the maximum extent, thereby providing a higher capacity and a lower electrochemical impedance.

Further, by selecting a specific combination of dopants, in combination with dry coating, porous secondary particles having a core-shell structure and composed of ordered primary particles are prepared, enabling the obtained cathode material to have a high particle strength. When the cathode material is used in a lithium-ion battery, the specific capacity, cycle performance and rate capacity of the lithium-ion battery can be significantly improved while prolonging the cycle life.

Further, in the method for preparing the lithium-ion battery cathode material provided by the present disclosure, a specific surface area of the primary sintered material is adjusted by combined doping. Further, by controlling the specific surface area of the primary sintered material, the surface of the prepared cathode material can be sufficiently wetted by an electrolyte, without causing excessively high lithium residue on the surface of the cathode material, and the cathode material prepared by coating the primary sintered material using the dry coating method can exhibit a higher discharge capacity.

### BRIEF DESCRIPTION OF THE DRAWINGS

FIG. 1 is a Scanning Electron Microscopy (SEM) image of a cross-section of a cathode material obtained in Example 1;
FIG. 2 is a SEM image of a surface of a cathode material obtained in Example 1;
FIG. 3 is a SEM image of a cross-section of a cathode material obtained in Example 9;
FIG. 4 is a SEM image of a surface of a cathode material obtained in Example 9;
FIG. 5 is a SEM image of a cross-section of a cathode material obtained in Example 10;
FIG. 6 is a SEM image of a surface of a cathode material obtained in Example 10;
FIG. 7 is a SEM image of a cross-section of a cathode material obtained in Example 2;
FIG. 8 is a SEM image of a surface of a cathode material obtained in Example 2;
FIG. 9 is a SEM image of a cross-section of a cathode material obtained in Example 3;
FIG. 10 is a SEM image of a surface of a cathode material obtained in Example 3;
FIG. 11 is a SEM image of a cross-section of a cathode material obtained in Example 4;
FIG. 12 is a SEM image of a surface of a cathode material obtained in Example 4;
FIG. 13 is a graph of a comparison of a first cycle discharge capacity of Example 1, Example 9, Comparative Example 1, and Comparative Example 3;
FIG. 14 is a graph of a comparison of dQ/dV of Example 1, Example 9, Comparative Example 1, and Comparative Example 3;
FIG. 15 is a graph of a comparison of a rate capacity of Examples 1 to 3, Example 9, and Example 10; and
FIG. 16 is a graph of a comparison of a cycle performance of Examples 1 to 3, Example 9, and Example 10.

### DETAILED DESCRIPTION

In order to achieve the above-mentioned effects, a first aspect of the present disclosure provides a lithium-ion battery cathode material. A ratio of surface Ni³⁺ content of the cathode material to internal Ni³⁺ content of the cathode material is (0.95 to 1): 1, and a content of disordering nickel in the cathode material is less than or equal to 3%.

In the present disclosure, the content of the disordering nickel refers to a proportion of Ni²⁺ undergoing lithium-nickel disorder to the total Ni, which can be measured by X-Ray Diffraction(XRD) refinement.

In the present disclosure, the surface Ni³⁺ content and the internal Ni³⁺ content of the cathode material are measured using X-ray photoelectron spectroscopy (XPS). The surface Ni³⁺ content of the cathode material is the result of directly performing XPS test on a finished sample, and the internal Ni³⁺ content is the result of performing XPS test on the product obtained after the finished sample is milled and crushed into primary particles and then etched by 30 nm.

For layered ternary cathode materials such as nickel cobalt manganese ternary cathode materials, Ni, Co, and Mn are located in a transition metal layer of lattice, where the active Ni has a theoretical valence of +3. In practical production, Ni²⁺ and Ni³⁺ ions co-exist in the crystal lattice, in which a part of Ni²⁺ ions may dissociate into the interlayer and intercalate into the reversible lithium layer, resulting in lithium-nickel disorder, which may affect the capacity and cycle life of lithium-ion battery prepared with the cathode material. In addition, in the preparation process of the conventional cathode material, the contact between the surface of cathode material and water during the water washing process results in significant delithiation on the surface of cathode material, eventually leading to the formation of NiOOH. NiOOH may be deoxidized during the subsequent heating process, to form a non-electrochemical rock-salt phase NiO passivation layer. It is found through XPS detection that the Ni³⁺ content on the surface of the cathode material is greatly reduced, and the Ni²⁺ content is increased, which finally results in a decrease in the electrochemical performance of lithium-ion battery prepared with the cathode material, in particular, a decrease in battery capacity and a significant increase in impedance and polarization.

However, the inventors have found through research that, when the surface and internal Ni³⁺ contents of the lithium-ion battery cathode material are controlled to be similar, and when the cathode material has a low content of disordering nickel, specifically satisfying the defined ranges of the present disclosure, the formation of the NiO passivation layer in the cathode material can be avoided, and the phenomenon of loss of surface active lithium can be reduced, enabling the lithium-ion battery including the cathode material to have improved capacity, rate capacity, and cycle performance.

Further, the ratio of the surface Ni³⁺ content of the cathode material to the internal Ni³⁺ content of the cathode material is (0.97 to 0.99): 1, and the content of the disordering nickel in the cathode material is less than or equal to 1.5%.

According to the present disclosure, in the cathode material, the ratio of a Ni³⁺ content to a Ni²⁺ content is greater than or equal to 2.

In the present disclosure, when the ratio of the content of Ni³⁺ to the content of Ni²⁺ in the cathode material satisfies the above-mentioned range, the cathode material has a higher activity, fewer crystal lattice defects, the electrochemical activity of the cathode material can be significantly improved. When the cathode material is used in a lithium-ion battery, the capacity and rate capacity of the battery can be significantly improved. At the same time, less divalent nickel in the cathode material can lead to less disordering nickel, which reduce the risk of lithium-nickel disorder, thereby improving the structural stability of the cathode material and prolonging the cycle life of the cathode material in the battery.

In the present disclosure, the Ni³⁺ content and the Ni²⁺ content of the cathode material are measured using XPS.

Further, in the cathode material, the ratio of the Ni³⁺ content to the Ni²⁺ content ranges from 3 to 8.

According to the present disclosure, a specific surface area S₀ of the cathode material ranges from 0.1 m²/g to 0.5 m²/g.

In the present disclosure, when the lithium-ion battery cathode material has the specific surface area, it can be ensured that the surface of the cathode material has a low residual lithium content, while the surface of the cathode material can be sufficiently wetted by an electrolyte. Thus, the lithium-ion battery including the cathode material can have a high discharge capacity.

Further, the specific surface area S₀ of the cathode material ranges from 0.1 m²/g to 0.45 m²/g.

According to the present disclosure, the cathode material fractured under a pressure of 3.5 T has a specific surface area S_{3.5}, where a specific surface area changing rate SSA= (S_{3.5}-S₀)/S₀ × 100%, SSA ranging from 0% to 50%.

In the present disclosure, when the specific surface area of the cathode material before and after being fractured under a pressure of 3.5 T satisfies the above-mentioned range, it indicates that the cathode material has a certain compressive property. A higher fracture strength, on the one hand, can avoid a fracture risk of the material in an electrode plate compaction during the process of preparing the electrode plate, thereby improving the safety and stability of the lithium-ion battery including the cathode material. On the other hand, the cathode material can endure higher pallet density, and can have higher energy density potential.

Further, (S_{3.5}-S₀)/S₀ × 100% ranges from 20% to 50%, and preferably, from 30% to 45%.

According to the present disclosure, a particle size D₁₀⁰, obtained by a particle size test, corresponding to 10% of a volume distribution of the cathode material and a particle size D₁₀^{3.5}, obtained by a particle size test, corresponding to 10% of a volume distribution of the cathode material fractured under a pressure of 3.5 T satisfy that (D₁₀⁰-D₁₀^{3.5})/D₁₀⁰ × 100% ranges from 0% to 30%.

Further, (D₁₀⁰-D₁₀¹)/D₁₀⁰ × 100% ranges from 0% to 20%.

According to the present disclosure, a particle size D₅₀⁰, obtained by a particle size test, corresponding to 50% of the volume distribution of the cathode material and a particle size D₅₀^{3.5}, obtained by a particle size test, corresponding to 50% of the volume distribution of the cathode material fractured under a pressure of 3.5 T satisfy that (D₅₀⁰-D₅₀^{3.5} )/D₅₀⁰ × 100% ranges from 0% to 15%.

Further, (D₅₀⁰-D₅₀^{3.5})/D₅₀0 × 100% ranges from 0% to 10%.

According to the present disclosure, a particle size D₉₀⁰, obtained by a particle size test, corresponding to 90% of the volume distribution of the cathode material and a particle size D₉₀^{3.5}, obtained by a particle size test, corresponding to 90% of the volume distribution of the cathode material fractured under a pressure of 3.5 T satisfy that (D₉₀⁰-D₉₀^{3.5})/D₉₀⁰ × 100% ranges from 0% to 8%.

Further, (D₉₀⁰-D₉₀^{3.5})/D₉₀⁰ × 100% ranges from 0% to 7%.

In the present disclosure, when at least one of D₁₀, D₅₀, and D₉₀ of the cathode material before and after being fractured under a pressure of 3.5 T satisfies the ranges described above, it indicates that the cathode material has a compression resistance property. The relatively smaller fracturing fine powder may be formed under high pressure, thereby improving the safety and stability of the cathode material during the top-level manufacturing process.

In the present disclosure, the particle size D₁₀⁰, obtained by a particle size test, corresponding to 10% of the volume distribution of the cathode material and a particle size D₁₀^{2.5}, obtained by a particle size test, corresponding to 10% of the volume distribution of the cathode material fractured under a pressure of 2.5 T satisfy that (D₁₀⁰-D₁₀^{2.5})/D₁₀⁰× 100% ranges from 0% to 10%, and preferably, (D₁₀⁰-D₁₀^{2.5})/D₁₀⁰ × 100% ranges from 0% to 6%.

In the present disclosure, the particle size D₅₀⁰, obtained by a particle size test, corresponding to 50% of the volume distribution of the cathode material and a particle size D₅₀^{2.5}, obtained by a particle size test, corresponding to 50% of the volume distribution of the cathode material fractured under a pressure of 2.5 T satisfy that (D₅₀⁰-D₅₀^{2.5} )/D₅₀⁰ × 100% ranges from 0% to 6%, and preferably, (D₅₀⁰-D₅₀^{2.5})/D₅₀⁰ × 100% ranges from 0% to 5%.

In the present disclosure, the particle size D₉₀⁰, obtained by a particle size test, corresponding to 590% of the volume distribution of the cathode material and a particle size D₉₀^{2.5}, obtained by a particle size test, corresponding to 90% of the volume distribution of the cathode material fractured under a pressure of 2.5 T satisfy that (D₉₀⁰-D₉₀^{2.5})/D₉₀⁰× 100% ranges from 0% to 4%, and preferably, (D₉₀0-D₉₀^{2.5})/D₉₀⁰ × 100% ranges from 0% to 3%.

In the present disclosure, the particle size D₁₀⁰, obtained by a particle size test, corresponding to 10% of the volume distribution of the cathode material and a particle size D₁₀^{4.5}, obtained by a particle size test, corresponding to 10% of the volume distribution of the cathode material fractured under a pressure of 4.5 T satisfy that (D₁₀⁰-D₁₀^{4.5})/D₁₀⁰ × 100% ranges from 0% to 50%, and preferably, (D₁₀⁰-D₁₀^{4.5})/D₁₀⁰ × 100% ranges from 0% to 40%.

In the present disclosure, the particle size D₅₀⁰, obtained by a particle size test, corresponding to 50% of the volume distribution of the cathode material and a particle size D₅₀^{4.5}, obtained by a particle size test, corresponding to 50% of the volume distribution of the cathode material fractured under a pressure of 4.5 T satisfy that (D₅₀⁰-D₅₀^{4.5} )/D₅₀⁰ × 100% ranges from 0% to 30%, and preferably, (D₅₀⁰-D₅₀^{4.5})/D₅₀⁰ × 100% ranges from 0% to 20%.

In the present disclosure, the particle size D₉₀⁰, obtained by a particle size test, corresponding to 90% of the volume distribution of the cathode material and a particle size D₉₀^{4.5}, obtained by a particle size test, corresponding to 90% of the volume distribution of the cathode material fractured under a pressure of 4.5 T satisfy that (D₉₀⁰-D₉₀^{3.5})/D₉₀⁰ × 100% ranges from 0% to 15%, and preferably, (D₉₀⁰-D₉₀^{3.5})/D₉₀⁰ × 100% ranges from 0% to 10%.

According to the present disclosure, the cathode material has a porosity ranging from 0% to 8%.

In the present disclosure, when the lithium-ion battery cathode material has the specific porosity and particularly a porosity distribution, the cycle life of a lithium-ion battery including the cathode material can be prolonged.

In the present disclosure, the porosity is measured based on a plurality of cross-sectional SEM images and software statistical methods.

Further, the porosity of the cathode material ranges from 2% to 7%, and preferably, from 3% to 6%.

According to the present disclosure, the cathode material is secondary particles having a core-shell structure.

According to the present disclosure, in the cathode material, a porosity of an inner core ranges from 0.1% to 2%.

According to the present disclosure, in the cathode material, a porosity of a shell layer ranges from 3% to 8%.

In the present disclosure, the lithium-ion battery cathode material has the specific porosity, and particularly, the inner core of the cathode material has a low porosity and the shell layer has a high porosity. A dense structure of the inner core having a lower porosity is conducive to enhancing the fracture strength of the cathode material. The shell layer having a higher porosity can provide space for expansion and contraction of the crystal cell volume during charging and discharging process, thereby releasing stress and prolonging the cycle life of the lithium-ion battery including the cathode material.

Further, in the cathode material, the porosity of the inner core ranges from 0.13% to 2%.

Further, in the cathode material, the porosity of the shell layer ranges from 4% to 7%.

According to the present disclosure, in the cathode material, a ratio of a radius of the inner core to a radius of a shell layer is (0.5 to 9): 1.

**In** the present disclosure, when the ratio of the radius of the inner core to the radius of the shell layer in the cathode material satisfies the above-mentioned range, a certain porosity of the material in the outer layer and a certain fracture strength of the material can be both ensured. When the cathode material is used in a lithium-ion battery, the lithium-ion battery can have excellent comprehensive properties, such as high capacity, excellent cyclability and stability.

Further, in the cathode material, the ratio of the radius of the inner core to the radius of the shell layer ranges from (0.5 to 3): 1.

According to the present disclosure, in the cathode material, primary particles of the inner core have an aspect ratio of (1 to 2): 1.

According to the present disclosure, in the cathode material, primary particles of the shell layer have an aspect ratio of (3 to 7): 1.

**In** the present disclosure, when the aspect ratio of the primary particles of the inner core and/or the aspect ratio of the primary particles of the shell layer in the cathode material satisfy the above-mentioned ranges, the inner core of the cathode material is composed of stacked oblate primary particles having a relatively small aspect ratio, and the primary particles are tightly and disorderly stacked to form a dense structure having a small porosity and a great grain boundary density. The shell layer is composed of elongated primary particles having a relatively great aspect ratio and arranged in the form of emission. The shell layer is arranged in a radial pattern by elongated primary particles having a relatively great aspect ratio, these primary particles have relatively few contact surfaces and many holes formed therebetween, and the primary particles are stacked into a loose structure. At the same time, the primary particles of the cathode material have an appropriate arrangement and orientation, which can release the stress generated during the charge and discharge process, to avoid the micro-cracks between the primary particle interfaces, thereby prolonging the cycle life of the cathode material.

Further, in the cathode material, the aspect ratio of the primary particles of the inner core ranges from (1.2 to 1.8): 1.

Further, in the cathode material, the aspect ratio of the primary particles of the shell layer ranges from (3 to 6): 1.

According to the present disclosure, primary particles of the cathode material have an aspect ratio of (1 to 6): 1.

Further, the primary particles of the cathode material have an aspect ratio of (1 to 5): 1.

According to the present application, the cathode material includes a matrix and a coating layer coated on the matrix. The coating layer comprises a lithium oxide compound containing element J and/or an oxide containing element J. The matrix has a composition represented by Formula I:

Li₁₊ₐ₁(NiₓCo_{y}Mn_{z}Mₘ)O₂ Formula I;

in Formula I, -0.1≤a₁≤0.2, 0<x<1, 0≤y≤0.4, 0<z≤0.6, 0≤m≤0.1; M is selected from at least one of Ta, Cr, Mo, W, Al, Y, Ti, Zr, V, Nb, Ca, P, Co, Ce, Er, Mg, B, Sr, Ba, and La; J is selected from at least one of Zr, V, B, Al, Sr, Co, W, Mo, and Mn.

In the present disclosure, the cathode material includes the coating layer made of the lithium oxide compound and/or oxide containing a specific element. The specific element can bind to or adhere to the surface of the cathode material, forming a protective layer on the surface of the cathode material, thereby reducing side reactions between the material and an electrolyte. In this way, the phenomenon of material pulverization can be reduced to a certain extent, and the cycle stability of a lithium-ion battery including the cathode material can be improved.

In the present disclosure, the lithium oxide compound containing element J and/or the oxide containing element J may further contain at least one element of Ni, Co, Mn, and M from the matrix.

In a specific embodiment of the present disclosure, -0.1≤a₁≤0.15, 0<x<0.99, 0<y≤0.3, 0<z≤0.4, 0<m≤0.05; M is selected from at least one of Ti, B, La, P, and W, and optionally at least one of Al, Nb, Cr, V, Mg, Sr, Y, Ce, Ca, V, Ta, Co, Zr, and Mo; J is selected from at least one of Zr, V, B, Al, Sr, Co, W, Mo, and Mn.

In the present disclosure, when a specific M element is contained in the cathode material, the primary particles of the cathode material can be promoted to preferentially grow in the direction of the dominant plane, enabling the primary particles to be presented in a more elongated structure. Thus, more voids are formed between the particles, and the overall porosity of the material is greater. The specific pore structure not only provides more accommodating and reaction space for the coating layer coated with the dry coating method, but also facilitates sufficient wetting of the material by the electrolyte, thereby releasing higher first cycle charge-discharge efficiency and rate capacity.

According to the present disclosure, the element J in the coating layer accounts for 0.05 wt% to 1.5 wt% of a total mass of the cathode material.

In the present disclosure, when the content of the element J in the coating layer of the cathode material satisfies the above-mentioned range, the coating layer can efficiently protect and modify the surface of the cathode material, while the exertion of the conductivity and gram capacity of the cathode material can be not affected by an excessive thickness of the coating layer.

Further, the element J in the coating layer accounts for 0.05 wt% to 1 wt% of the total mass of the cathode material.

According to the present disclosure, in the cathode material, surface free Li accounts for 3% to 6% of a molar ratio of total element Li.

In the present disclosure, the surface free Li refers to the total lithium content of lithium carbonate and lithium hydroxide on the surface of the cathode material, which is measured by potentiometric titration using 905 potentiometric titrator.

When the content of surface free Li in the cathode material is within the above-mentioned range, an effective active lithium content can be provided, to reduce the risk of lithium lattice deficiency of the material, thereby ensuring the exertion of the high capacity of the material, and it is avoided that excessive free Li on the surface increases the resistance of the material and storage and gas generation, etc.

Further, in the cathode material, the surface free Li accounts for 3.5% to 5% of the molar ratio of the total element Li.

According to the present disclosure, the cathode material has a moisture content ranging from 0 ppm to 100 ppm.

In the present disclosure, when the moisture content of the cathode material satisfies the above-mentioned range, it indicates that the cathode material contains less crystal water and adsorbed water, and thus side reactions with water can be reduced, such that the cathode material has high electrochemical activity. When the cathode material is used in a lithium-ion battery, the battery can have excellent cycle stability.

In the present disclosure, the moisture content of the cathode material is measured using an accurate moisture meter.

Further, the moisture content of the cathode material ranges from 0 ppm to 80 ppm.

A second aspect of the present disclosure provides a method for preparing a lithium-ion battery cathode material. The method includes: S1, mixing a cathode material precursor, a lithium source, and optionally a dopant, performing primary sintering under a first oxygen-containing atmosphere, and performing cooling, crushing, and sieving, to obtain a primary sintered material; and S2, mixing the primary sintered material with a coating agent, performing secondary sintering under a second oxygen-containing atmosphere, and performing sieving and iron removing, to obtain the lithium-ion battery cathode material.

The second oxygen-containing atmosphere has an oxygen concentration greater than or equal to 90 vol%.

In the method for preparing a lithium-ion battery cathode material of the present disclosure, in an atmosphere with a high oxygen concentration content, the formation of an inactive passivation layer, which is attributed to delithiation occurred when a surface of a high nickel ternary material is in contact with water during the conventional water washing process, can be avoided by using a dry coating method. Thus, the same structure of the surface and the bulk phase and the trivalent active nickel content can be remained to the maximum extent. Specifically, the lithium-ion battery cathode material according to the first aspect of the present disclosure can be prepared, and the cathode material has a lower electrochemical impedance. When the cathode material is used in a lithium-ion battery, the capacity, rate capacity, and cycle performance of the lithium-ion battery can be significantly improved.

Further, the oxygen concentration in the second oxygen-containing atmosphere is greater than or equal to 98 vol%.

According to the present disclosure, in step S1, the dopant is a compound containing a doping element M, and M is selected from at least one of Ta, Cr, Mo, W, Al, Y, Ti, Zr, V, Nb, Ca, P, Co, Ce, Er, Mg, B, Sr, Ba, and La.

According to the present disclosure, an oxygen concentration in the first oxygen-containing atmosphere is greater than or equal to 95 vol%, and preferably, ranging from 98 vol% to 100 vol%.

According to the present disclosure, the primary sintering include: rising a temperature from the room temperature to a range of 600°C to 900°C with a heating rate of 2°C/min to 8°C/min, and sintering for 8 hours to 14 hours.

In the present disclosure, when the primary sintering is performed under the above-mentioned conditions, lithium hydroxide has a reasonable melting and migration time, so that the solid phase reaction of lithiation and doping is more sufficient, and the high oxygen concentration also facilitates that the bivalent nickel of nickel cobalt manganese hydroxide is oxidized to trivalent nickel of nickel cobalt lithium manganate to the maximum extent, thereby forming an electrochemically active layered material with fewer defects.

Further, the primary sintering include: rising a temperature from the room temperature to a range of 600°C to 850°C with a heating rate of 3°C/min to 6°C/min, and sintering for 8 hours to 12 hours.

According to the present disclosure, in step S2, the coating agent is a compound containing a coating element J, and J is selected from at least one of Zr, V, B, Al, Sr, Co, W, Mo, and Mn.

According to the present disclosure, the conditions of the secondary sintering include: a sintering temperature ranging from 200°C to 600°C, and a sintering duration ranging from 8 hours to 14 hours.

In the present disclosure, when the secondary sintering is performed under the above-mentioned conditions, the coating agent can sufficiently react and bond with the material matrix, to play the role of protecting and modifying the surface of the material, thereby enhancing the cycling stability of the material. A part of the coating agent can react with the surface residual alkali under the above-mentioned conditions. Thus, on the one hand, the surface insulating substance can be consumed to improve the discharge capacity and rate capacity of the lithium-ion battery including the cathode material, and on the other hand, g the gas generation of the material can be reduced during storage and circulation.

Further, the conditions of the secondary sintering include: the sintering temperature ranging from 300°C to 600°C and the sintering duration ranging from 8 hours to 12 hours.

According to the present disclosure, in step S1, an addition amount of the lithium source is based on a stoichiometric ratio of 0.9≤n(Li)/n(Me)≤1.2, preferably 1≤n(Li)/n(Me)≤1.1, where n(Me) is a total molar amount of the metal elements in the cathode material precursor.

According to the present disclosure, in step S1, an addition amount of the dopant is based on a stoichiometric ratio of 0≤n(M)/n(Me)≤0.1, preferably 0<n(M)/n(Me)≤0.05, where n(Me) is the total molar amount of the metal elements in the cathode material precursor.

According to the present disclosure, in step S2, an addition amount of the coating agent is based on a mass ratio of 0.05 wt%≤m(J)/[m(BM)]≤1.5 wt%, where m(J) is a mass of the element J in the coating agent, and where m(BM) is a mass of the primary sintered material of the cathode material.

Further, in step S2, the addition amount of the coating agent is based on a mass ratio of 0.05 wt%≤m(J)/[m(BM)]≤1 wt%.

In a specific embodiment of the present disclosure, in step S1, the dopant includes at least one of a first dopant, a second dopant, and a third dopant. The first dopant is a compound containing a doping element M₁, and M₁ is selected from at least one of Al, Nb, Cr, V, Mg, and Sr. The second dopant is a compound containing a doping element M₂, and M₂ is selected from at least one of Ti, B, La, P, and W. The third dopant is a compound containing a doping element M₃, and M₃ is selected from at least one of Y, Ce, Ca, V, Ta, Co, Zr, and Mo.

In the present disclosure, the terms "first dopant", "second dopant", and "third dopant" are only used to distinguish the different types of the dopants and the types of the doping elements.

In the present disclosure, a specific combination of dopants is selected and combined with the dry coating method. The first dopant M₁ is a basic and conventional dopant for stabilizing a layered oxide structure. The second dopant is a specific dopant for refining primary particles of the material, forming a greater porosity between the particles, and forming loose secondary particles. The third dopant is a specific dopant for allowing the material to be arranged more densely and orderly, and thus for forming a core-shell structure with a loose outer layer and a dense core. In the present disclosure, the combination and coordination of dopants enables the preparation of porous secondary particles, which have a core-shell structure and composed of orderly arranged primary particles. Thus, the obtained cathode material has a high particle strength. When the cathode material is used in a lithium-ion battery, the specific capacity, cycle performance and rate capacity of the lithium-ion battery can be significantly improved, while prolonging the cycle life.

In a preferred embodiment of the present disclosure, the dopant is a combination of the second dopant with the first dopant and/or the third dopant.

According to the present disclosure, in step S1, an addition amount of the first dopant is based on a stoichiometric ratio of 0≤n(M₁)/n(Me)≤0.1, preferably 0≤n(M₁)/n(Me)≤0.05, where n(Me) is the total molar amount of the metal elements in the cathode material precursor.

According to the present disclosure, in step S1, an addition amount of the second dopant is based on a stoichiometric ratio of 0≤n(M₂)/n(Me)≤0.1, preferably 0≤n(M₂)/n(Me)≤0.05, where n(Me) is the total molar amount of the metal elements in the cathode material precursor.

According to the present disclosure, in step S1, an addition amount of the third dopant is based on a stoichiometric ratio of 0:≤n(M₃)/n(Me)≤0.1, preferably 0≤n(M₃)/n(Me)≤0.05, where n(Me) is the total molar amount of the metal elements in the cathode material precursor.

In a specific embodiment of the present disclosure, the primary sintered material has a specific surface area ranging from 0.15 m²/g to 0.8 m²/g.

In the present disclosure, when the specific surface area of the primary sintered material is within the above-mentioned range, the surface of the primary sintered material has a porous and loose structure. When performing coating on the primary sintered material, the coating agent can easily enter the pores of the primary sintered material to achieve good coating of the primary sintered material. The prepared cathode material has a low electrochemical impedance. When the cathode material is used in a lithium-ion battery, the discharge capacity and rate capacity of the lithium-ion battery can be significantly improved.

Further, the specific surface area of the primary sintered material ranges from 0.35 m²/g to 0.65 m²/g, and preferably, 0.35 m²/g to 0.6 m²/g.

According to the present disclosure, in step S2, a particle size D₁₀ corresponding to 10% of a volume distribution of the coating agent, a particle size D₅₀ corresponding to 50% of the volume distribution of the coating agent, and a particle size D₉₀ corresponding to 90% of the volume distribution of the coating agent satisfy 1.85≤K₉₀ = (D₉₀-D₁₀)ID₅₀\2.83. The particle size D₁₀, the particle size D₅₀, and the particle size D₉₀ are obtained by a particle size test.

In the present disclosure, when the primary sintered material is dry-coated using the coating agent with K₉₀ satisfying the above-mentioned range, the coating uniformity can be improved. Specifically, the small particles in the coating agent are more likely to be melted and enter pores on the surface of the primary sintered material, while the large particles in the coating agent can be melted and uniformly dispersed on the surface of the primary sintered material, thereby improving the coating effect of the coating agent.

In a specific embodiment of the present disclosure, when the coating agent is a compound containing coating element B, the coating agent has D₁₀ ranging from 5 µm to 15 µm, D₅₀ ranging from 30 µm to 40 µm, and D₉₀ ranging from 80 µm to 90 µm.

In the present disclosure, the cathode material precursor may be a conventional cathode material precursor known in the art, and preferably, the cathode material precursor is prepared according to the following steps: preparing a mixed salt solution of nickel salt, cobalt salt, and manganese salt; introducing the mixed salt solution, a precipitant solution, and a complexing agent solution into a reaction kettle; performing co-precipitation reaction in an inert gas; and performing aging, washing, and drying, to obtain the cathode material precursor.

In the present disclosure, the nickel salt, the cobalt salt, and the manganese salt are not limited to the specific types, and they can be the conventional nickel salt, cobalt salt, and manganese salt known in the art. For example, the nickel salt is nickel sulfate, the cobalt salt is cobalt sulfate, and the manganese salt is manganese sulfate.

In the present disclosure, the amount of the used nickel salt, cobalt salt, and manganese salt satisfies that n(Ni): n(Co): n(Mn)= x: y: z, where 0<x<1, 0<y≤0.4, and 0<z≤ 0.6.

According to the present disclosure, a concentration of the mixed salt solution ranges from 1 mol/L to 3 mol/L.

In the present disclosure, the precipitant solution is not limited to a specific type, and it can be a conventional precipitant solution known in the art, for example, a solution of sodium hydroxide.

In the present disclosure, the complexing agent solution is not limited to a specific type, and it can be a conventional complexing agent solution known in the art, for example, ammonia.

According to the present disclosure, a concentration of the precipitant solution ranges from 7 mol/L to 10 mol/L.

According to the present disclosure, a concentration of the complexing agent solution is greater than or equal to 5 mol/L.

According to the present disclosure, the conditions of the co-precipitation reaction include: a pH ranging from 10.5 to 11.5, a stirring speed ranging from 200 rpm 800 rpm, a reaction temperature ranging from 50°C to 80°C, and the mixed salt solution being introduced into the reaction kettle at a speed of 100 mL/h to 400 mL/h.

In the present disclosure, when the pH value, the speed at which the mixed salt solution is introduced into the reaction kettle, the reaction temperature, and the stirring rate during the co-precipitation reaction can controlled to satisfy the above-mentioned ranges, the primary fibers of the precursor can grow as an elongated structure and thus can be arranged in a radial pattern. The precursor having such a structure has a loose structure and an ordered arrangement, which is conducive to the sufficient lithiation and the formation of a layered oxide cathode material with less defects.

Further, the conditions of the co-precipitation reaction include: the pH ranging from 10.6 to 11.4, a stirring speed ranging from 300 rpm 700 rpm, a reaction temperature ranging from 55°C to 80°C, preferably 55°C to 75°C, and the mixed salt solution being introduced into the reaction kettle at a speed of 100 mL/h to300 mL/h.

A third aspect of the present disclosure provides a lithium-ion battery cathode material prepared by the above-mentioned method.

A fourth aspect of the present disclosure provides a lithium-ion battery. The lithium-ion battery is characterized in that the lithium-ion battery includes the lithium-ion battery cathode material described above.

In the present disclosure, the room temperature refers to 25°C, unless otherwise specified.

The present disclosure will be described in detail by way of examples. In the following examples:
(1) Morphology test: obtained by testing with scanning electron microscope S-4800 from HITACHI, Japan;
(2) Particle diameters D₁₀, D₅₀, and D₉₀: obtained by testing with a laser particle size analyzer Hydro 2000mu from Marvern;
(3) Specific surface test: obtained by testing with a surface meter of Tristar 3020 from Micromeritics;
(4) XRD refinement: obtained by testing with the Smart Lab9 KW from Rigaku Corporation;
(5) Particle strength test: obtained by testing the particles through a micro-compression tester MCT-210 from Shimadzu Corporation;
(6) XPS: obtained by a spectrometer ESCALAB 250from Perkin Elmer, USA;
(7) Surface free Li content: determined by potentiometric titration with 905 potentiometric titrator;
(8) Composition of the matrix in the cathode material: measured by ICP;
(9) Moisture content of the cathode material: measured using an accurate moisture meter;
(10) Electrochemical performance test: in the following examples and comparative examples, the electrochemical performance of the multi-element cathode material was tested using a 2025 button battery.

The preparation process of the 2025 button battery is as follows.

Preparation of electrode plates: a multi-element cathode material, acetylene black, and polyvinylidene fluoride (PVDF) at a mass ratio of 95:3:2 were thoroughly mixed with an appropriate amount of N-methyl pyrrolidone (NMP) to form a uniform slurry; the slurry was coated on an aluminum foil and dried at 120°C for 12 h; and the coated foil was stamped using a pressure of 100 MPa to prepared a positive electrode plate with a diameter of 12 mm and a thickness of 120 µm, with a loading amount of the multi-element cathode material ranging 15 mg/cm² to 16 mg/cm².

Battery assembly: the positive electrode plate, a separator, a negative electrode plate, and an electrolyte were assembled into a 2025 button battery in a gas glove box filled with argon gas where a water content and an oxygen content were both less than 5 ppm, and the assembled battery was left to stand for 6 hours. As the negative electrode plate, a metal lithium plate with a diameter of 17 mm and a thickness of 1 mm was used. As the separator, a polyethylene porous membrane (Celgard 2325) with a thickness of 25 µm was used. As the electrolyte, a mixture of equivalent amounts of LiPF₆ (1 mol/L), ethylene carbonate (EC) and diethyl carbonate (DEC) was used.

### A 2025 button battery test:

In the following examples and comparative examples, the electrochemical performances of the button battery were tested using a Neware battery testing system (NEWARE TECHNOLOGY LIMITED, Shenzhen), which a charge/discharge current density at 0.1C of 200 mA/g.

A charge/discharge voltage range was controlled within 3.0 V to 4.3 V. At the room temperature, a charge/discharge test was performed on the button battery at 0.1C to evaluate the first charge/discharge specific capacity and first charge/discharge efficiency of the multi-element cathode material.

Cycle performance test: a charge/discharge voltage range was controlled within 3.0 V to 4.3 V; at a constant temperature of 45°C, the button battery was charged and discharged for 2 cycles at 0.1C, and then charged and discharged for 80 cycles at 1C to evaluate the high-temperature cycle capacity retention rate of the cathode material.

Rate capability test: a charge/discharge voltage range was controlled within 3.0 V to 4.3 V; at the room temperature, the button battery was charged and discharged for 2 cycles at 0.1C, and then charged and discharged for 1 cycle at 0.2C, 0.33C, 0.5C and 1C, respectively; and the rate capability of the multi-element cathode material was evaluated based a ratio of the first discharge specific capacity at 0.1C to the discharge specific capacity at 1C. The first discharge specific capacity at 0.1C was the discharge specific capacity of the button battery in the first cycle, and the discharge specific capacity at 1C was the discharge specific capacity of the button battery in the sixth cycle.

### Example 1

(1) Nickel sulfate, cobalt sulfate, and manganese sulfate were dissolved in pure water at a molar ratio of n(Ni): n(Co): n(Mn) of 98: 1: 1 to obtain a mixed salt solution **A** having a concentration of 2.2 mol/L. A sodium hydroxide solution having a concentration of 8 mol/L was prepared as a precipitant solution **B,** and ammonia water having a concentration of 6 mol/L was prepared as a complexing agent solution **C.** A reaction kettle was added with a base solution to adjust pH to 11, nitrogen gas was introduced for protection, the system temperature was controlled at 60°C. The solutions **A, B,** and **C** were added into the reaction kettle through liquid inlet pipelines, respectively, and stirred with a speed of 500 rpm. A liquid inlet amount of the mixed salt solution **A** was controlled at 200 mL/h, and the flow rates of solutions **B** and **C** were adjusted to maintain the pH of the reaction system to be stable at 11±0.05. The reaction was stopped when the average particle size D₅₀ in the solution grew to 14 µm, and then aging, separating, washing, and drying were performed to obtain a cathode material precursor.
(2) The above-mentioned cathode material precursor, lithium hydroxide, a first dopant (aluminum oxide and niobium oxide), a second dopant (boric acid), and a third dopant (yttrium oxide), in a molar ratio n(Me): n(Li): n(Al): n(Nb): n(B): n(Y) = 1: 1.03: 0.01: 0.002: 0.001: 0.002, were respectively weighed, and mixed uniformly. The mixture was sintered in an oxygen furnace at a constant temperature, with an oxygen concentration of 99%, with the temperature rise rate of 5°C/min to 700°C from the room temperature, and the sintering duration was 12 h. After cooling, crushing, and sieving, the primary sintered material was obtained. The specific surface area of the primary sintered material was 0.45 m²/g.
(3) Element B in the boric acid I and the primary sintered material were added according to a mass ratio of m(B)/[m(BM)] = 0.15 wt%. The mixture was placed in a high-speed mixer to mix uniformly, and sintered in an oxygen furnace at a constant temperature of 350°C, with an oxygen concentration of 99% and a sintering duration of 10 h. After cooling, sieving, and iron removal, a cathode material A1 was obtained. The cathode material A1 included a matrix with a composition of Li_{1.03}(Ni_{0.965}Co_{0.01}Mn_{0.01}Al_{0.01}Nb_{0.002}B_{0.001}Y_{0.002})O₂, and a coating layer coated on the surface of the matrix and containing an oxide of B and/or a lithium oxide compound of B. The element B in the coating layer accounted for 0.15 wt% of the total mass of the cathode material.

D₁₀ of boric acid I was 10.2 µm, D₅₀ was 32.1 µm, D₉₀ was 83.3 µm, and the distribution coefficient K₉₀ was 2.27.

The cathode material A1 were tested in terms of the surface Ni³⁺ content, internal Ni³⁺ content, disordering nickel content, surface free Li content, specific surface area, and moisture content, and the results are shown in Table 1.

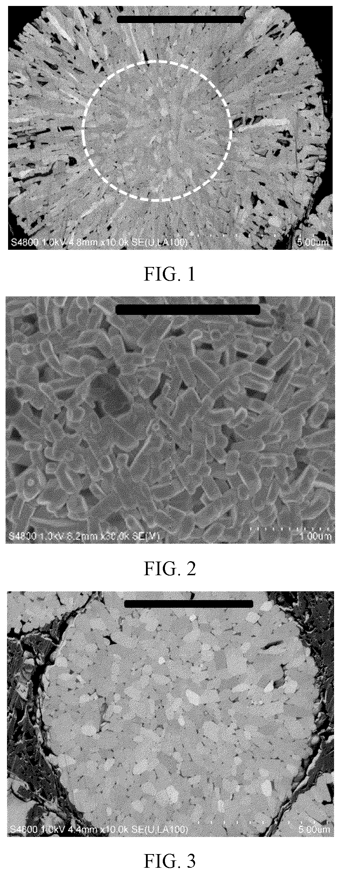

The SEM images of the cross-section and surface of the cathode material A1 prepared in Example 1 are shown in FIG. 1 and FIG. 2, respectively. It can be seen that the cathode material has a core-shell structure, and the inner core and the shell layer have different porosities; the primary particles in the shell layer are arranged in a radial pattern. In the cathode material A1, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 2

Step (1) was the same as step (1) of Example 1.

(2) The cathode material precursor, lithium hydroxide, a first dopant (aluminum oxide and niobium oxide), a second dopant (boric acid), and a third dopant (yttrium oxide), in a molar ratio n(Me): n(Li): n(Al): n(Nb): n(B): n(Y) = 1: 1.03: 0.01: 0.002: 0.001: 0.005, were respectively weighed, and mixed uniformly. The mixture was sintered in an oxygen furnace at a constant temperature, with an oxygen concentration of 99%, with the temperature rise rate of 5°C/min to 700°C from the room temperature, and the sintering duration was 12 h. After cooling, crushing, and sieving, the primary sintered material was obtained. The specific surface area of the primary sintered material was 0.39 m²/g.

Step (3) was the same as Example 1, a cathode material A2 was obtained. The cathode material A2 included a matrix with a composition of Li_{1.03}(Ni_{0.962}C_{00.01}Mn_{0.01}Al_{0.}Nb_{0.002}B_{0.001} Y_{0.005})O₂, and a coating layer coated on the surface of the matrix and containing an oxide of B and/or a lithium oxide compound of B. The element B in the coating layer accounted for 0.15 wt% of the total mass of the cathode material.

The cathode material A2 were tested in terms of the surface Ni³⁺ content, internal Ni³⁺ content, disordering nickel content, surface free Li content, specific surface area, and moisture content, and the results are shown in Table 1.

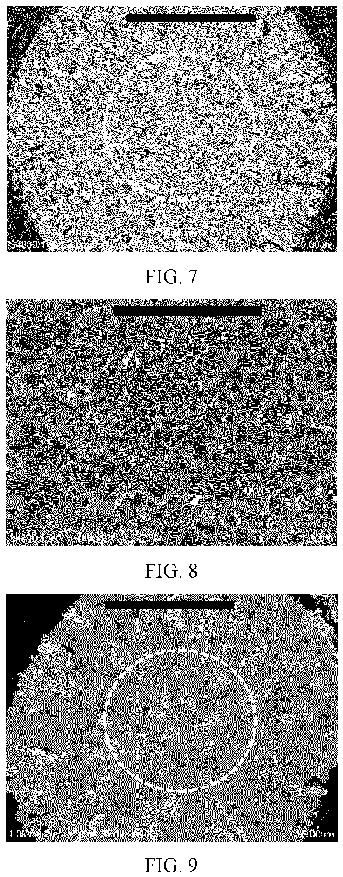

The SEM images of the cross-section and surface of the cathode material A2 prepared in Example 2 are shown in FIG. 7 and FIG. 8, respectively. It can be seen that the cathode material has a core-shell structure, and the inner core and the shell layer have different porosities; the primary particles in the shell layer are arranged in a radial pattern. Compared with the cathode material A1 of Example 1, the inner core and the shell layer of the cathode material A2 have a lower porosity, and the primary particles in the inner core are arranged more densely, the primary particles in the shell layer are in a more ordered radial arrangement and have a greater aspect ratio.

In the cathode material A2, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 3

Step (1) was the same as step (1) of Example 1.

(2) The cathode material precursor, lithium hydroxide, a first dopant (aluminum oxide), a second dopant (ammonium dihydrogen phosphate), and a third dopant (yttrium oxide), in a molar ratio n(Me): n(Li): n(Al): n(P): n(Y) = 1: 1.03: 0.01: 0.001: 0.002, were respectively weighed, and mixed uniformly. The mixture was sintered in an oxygen furnace at a constant temperature, with an oxygen concentration of 99%, with the temperature rise rate of 5°C/min to 700°C from the room temperature, and the sintering duration was 12 h. After cooling, crushing, and sieving, the primary sintered material was obtained. The specific surface area of the primary sintered material was 0.41 m²/g.

Step (3) was the same as Example 1, a cathode material A3 was obtained. The cathode material A3 includes a matrix with a composition of Li_{1.03}(Ni_{0.967}C_{00.01}Mn_{0.01}Al_{0.01}P_{0.001} Y_{0.002})O₂, and a coating layer coated on the surface of the matrix and containing an oxide of B and/or a lithium oxide compound of B. The element B in the coating layer accounted for 0.15 wt% of the total mass of the cathode material.

The cathode material A3 were tested in terms of the surface Ni³⁺ content, internal Ni³⁺ content, disordering nickel content, surface free Li content, specific surface area, and moisture content, and the results are shown in Table 1.

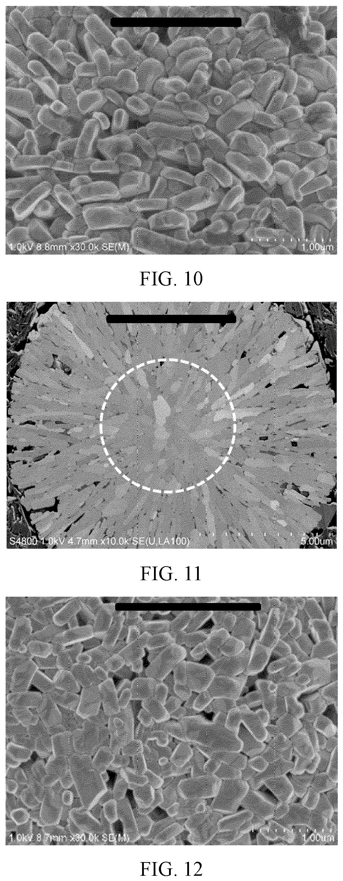

The SEM images of the cross-section and surface of the cathode material A3 prepared in example 3 are shown in FIG. 9 and FIG. 10, respectively. It can be seen that the cathode material has a core-shell structure, and the inner core and the shell layer have different porosities; the primary particles in the shell layer are arranged in a radial pattern. Compared with the cathode material A1 of Example 1, the cathode material A3 has a slightly smaller difference in porosity between the inner core and the shell layer, and also has some voids in the inner core portion.

In the cathode material A3, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 4

Step (1) was the same as step (1) of Example 1.

(2) The cathode material precursor, lithium hydroxide, a first dopant (aluminum oxide), a second dopant (boric acid), and a third dopant (zirconia), in a molar ratio n(Me): n(Li): n(Al): n(B): n(Zr) = 1: 1.03: 0.01: 0.001: 0.002, were respectively weighed, and mixed uniformly. The primary sintering was performed according to the conditions of example 1 to obtain a primary sintered material, wherein the specific surface area of the primary sintered material was 0.39 m²/g.

Step (3) was the same as Example 1, a cathode material A4 was obtained. The cathode material A4 included a matrix with a composition of Li_{1.03}(Ni_{0.967}C_{00.01}Mn_{0.01}Al_{0.01}B_{0.001}Zr_{0.002})O₂, and a coating layer coated on the surface of the matrix and containing an oxide of B and/or a lithium oxide compound of B. The element B in the coating layer accounted for 0.15 wt% of the total mass of the cathode material.

The cathode material A4 were tested in terms of the surface Ni³⁺ content, internal Ni³⁺ content, disordering nickel content, surface free Li content, specific surface area, and moisture content, and the results are shown in Table 1.

The SEM images of the cross-section and surface of the cathode material A4 prepared in Example 4 are shown in FIG. 11 and FIG. 12, respectively. It can be seen that the cathode material has a core-shell structure, and the inner core and the shell layer have different porosities; and the primary particles in the shell layer are arranged in a radial pattern. Compared with the cathode material A1 of Example 1, the cathode material A4 had a slightly smaller porosity in the shell layer and a smaller particle aspect ratio.

In the cathode material A4, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 5

(1) Nickel sulfate, cobalt sulfate, and manganese sulfate were dissolved in pure water according to the molar ratio of n(Ni):n(Co):n(Mn) of 82:10:8 to obtain a mixed salt solution **A** having a concentration of 2 mol/L. A sodium hydroxide solution having a concentration of 8 mol/L was prepared as a precipitant solution **B,** and ammonia water having a concentration of 5.4 mol/L was prepared as a complexing agent solution **C.** A base solution was added into the reaction kettle to adjust pH to 11, and nitrogen gas was introduced for protection. The system temperature was controlled at 60°C. The solutions **A, B** and **C** were added into the reaction kettle from through liquid inlet pipelines, respectively, and stirred with a speed of 500 rpm. A liquid inlet volume of mixed salt solution **A** was controlled at 200 mL/h, and the flow rates of solutions **B** and **C** were adjusted to maintain the pH of the reaction system to be stable at 11±0.05. The reaction was stopped when the average particle size D₅₀ in the solution grew to 14 µm, and then aging, separating, washing, and drying were performed to obtain a cathode material precursor.
(2) The cathode material precursor, lithium hydroxide, a first dopant (aluminum oxide), a second dopant (boric acid), and a third dopant (yttrium oxide), in a molar ratio n(Me): n(Li): n(Al): n(B): n(Y) = 1: 1.03: 0.01: 0.004: 0.002, were respectively weighed, and mixed uniformly. The mixture was sintered in an oxygen furnace at a constant temperature, with an oxygen concentration of 99%, with the temperature rise rate of 5°C/min to 750°C from the room temperature, and the sintering duration was 12 h. After cooling, crushing, and sieving, the primary sintered material was obtained. The specific surface area of the primary sintered material was 0.35m²/g.
(3) Step (3) was substantially the same as step (3) of Example 1, with the only difference in that the element B in the boric acid I and the primary sintered material were in a mass ratio of mm(B)/[m(BM)] = 0.12 wt%, a cathode material A5 was obtained. The cathode material A5 included a matrix with a composition of Li_{1.03}(Ni_{0.804}Co_{0.1}Mn_{0.08}Al_{0.01}B_{0.004}Y_{0.002})O₂, and a coating layer coated on the surface of the matrix and containing an oxide of B and/or a lithium oxide compound of B. The element B in the coating layer accounted for 0.12 wt% of the total mass of the cathode material.

The cathode material A5 were tested in terms of the surface Ni³⁺ content, internal Ni³⁺ content, disordering nickel content, surface free Li content, specific surface area, and moisture content, and the results are shown in Table 1.

In the cathode material A5, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 6

(1) Nickel sulfate, cobalt sulfate, and manganese sulfate were dissolved in pure water according to the molar ratio of n(Ni):n(Co):n(Mn) of 60:20:20 to obtain a mixed salt solution **A** having a concentration of 1.6 mol/L. A sodium hydroxide solution having a concentration of 8 mol/L was prepared as a precipitant solution **B,** and ammonia water having a concentration of 4.8 mol/L was prepared as a complexing agent solution **C.** A reaction kettle was added with a base solution to adjust pH to 11, nitrogen gas was introduced for protection, the system temperature was controlled at 60°C. The solutions **A, B,** and **C** were added into the reaction kettle through liquid inlet pipelines, respectively, and stirred with a speed of 500 rpm. A liquid inlet amount of the mixed salt solution **A** was controlled at 200 mL/h, and the flow rates of solutions **B** and **C** were adjusted to maintain the pH of the reaction system to be stable at 11±0.05. The reaction was stopped when the average particle size D₅₀ in the solution grew to 14 µm, and then aging, separating, washing, and drying were performed to obtain a cathode material precursor.
(2) The cathode material precursor, lithium hydroxide, a first dopant (aluminum oxide), a second dopant (boric acid), and a third dopant (yttrium oxide), in a molar ratio n(Me): n(Li): n(Al): n(B): n(Y) = 1: 1.03: 0.01: 0.005: 0.001, were respectively weighed, and mixed uniformly. The mixture was sintered in an oxygen furnace at a constant temperature, with an oxygen concentration of 99%, with the temperature rise rate of 5°C/min to 850°C from the room temperature, and the sintering duration was 12 h. After cooling, crushing, and sieving, the primary sintered material was obtained. The specific surface area of the primary sintered material was 0.35m²/g.
(3) Step (3) was substantially the same as step (3) of Example 1, with the only difference in that the element B in the boric acid I and the primary sintered material are in a mass ratio of mm(B)/[m(BM)] = 0.1 wt%, a cathode material A6 was obtained. The cathode material A6 included a matrix with a composition of Li_{1.03}(Ni_{0.584}Co_{0.2}Mn_{0.2}Al_{0.01}B_{0.005}Y_{0.001})O₂, and a coating layer coated on the surface of the matrix and containing an oxide of B and/or a lithium oxide compound of B. The coating layer accounted for 0.1 wt% of the total mass of the cathode material.

The cathode material A6 were tested in terms of the surface Ni³⁺ content, internal Ni³⁺ content, disordering nickel content, surface free Li content, specific surface area, and moisture content, and the results are shown in Table 1.

In the cathode material A6, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 7

Step (1) and Step (2) were the same as Step (1) and Step (2) of Example 1;

(3) Boric acid I was replaced with boric acid II, and a cathode material A7 was obtained. The cathode material A7 included a matrix with a composition of Li_{1.03}(Ni_{0.965}Co_{0.01}Mn_{0.01}Al_{0.01}Nb_{0.002}B_{0.001}Y_{0.002})O₂, and a coating layer coated on the surface of the matrix and containing an oxide of B and/or a lithium oxide compound of B. The element B in the coating layer accounted for 0.15 wt% of the total mass of the cathode material.

D₁₀ of boric acid II was 20.1 µm, D₅₀ was 43.2 µm, D₉₀ was 67.2 µm, and the distribution coefficient K₉₀ was 1.09.

The cathode material A7 were tested in terms of the surface Ni³⁺ content, internal Ni³⁺ content, disordering nickel content, surface free Li content, specific surface area, and moisture content, and the results are shown in Table 1.

In the cathode material A7, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 8

Step (1) and Step (2) were the same as Step (1) and Step (2) of Example 1;

(3) Tungsten oxide was used to replace boric acid I, in which the element W in the tungsten oxide and the primary sintered material were mixed in a high-speed mixer according to a mass ratio of m(W)/[m(BM)] = 0.2 wt%. The mixture was sintered in an oxygen furnace at a constant temperature of 460°C, with an oxygen concentration of 99% and a sintering duration of 10 h. After cooling, sieving, and iron removal, a matrix with a composition of Li_{1.03}(Ni_{0.965}Co_{0.01}Mn_{0.01}Al_{0.01}Nb_{0.002}B_{0.001} Y_{0.002})O₂ was obtained, and a coating layer containing an oxide of W and/or a lithium oxide compound of W was coated on the surface of the matrix. The coating layer accounted for 0.20 wt% of the total mass of the cathode material.

The tungsten oxide has a distribution coefficient K₉₀ of 1.51.

The surface Ni³⁺ content, internal Ni³⁺ content, disordering nickel content, surface free Li content, specific surface area, and moisture content of the cathode material A8 were tested, and the results are shown in Table 1.

In the cathode material A8, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

In Example 8, tungsten oxide was used as the coating agent. Tungsten oxide can also react with excess Li on the surface of the cathode material to reduce the content of free Li on the surface of the cathode material. The rate capacity and cycle performance of a lithium-ion battery including the cathode material can be improved.

### Example 9

Step (1) was the same as step (1) of Example 1.

(2) The cathode material precursor, lithium hydroxide, a first dopant (aluminum oxide and niobium oxide), in a molar ratio n(Me):n(Li):n(Al):n(Nb)=1:1.03:0.01:0.002, were respectively weighed, and mixed uniformly. The mixture was sintered in an oxygen furnace at a constant temperature, with an oxygen concentration of 99%, with the temperature rise rate of 5°C/min to 700°C from the room temperature, and the sintering duration was 12 h. After cooling, crushing, and sieving, the primary sintered material was obtained. The specific surface area of the primary sintered material was 0.19 m²/g.

Step (3) was the same as Example 1, a cathode material A9 was obtained. The cathode material A9 included a matrix with a composition of Li_{1.03}(Ni_{0.968}Co_{0.01}Mn_{0.01}Al_{0.01}Nb_{0.002})O₂, and a coating layer coated on the surface of the matrix and containing an oxide of B and/or a lithium oxide compound of B. The element B in the coating layer accounted for 0.15 wt% of the total mass of the cathode material.

The cathode material A9 were tested in terms of the surface Ni³⁺ content, internal Ni³⁺ content, disordering nickel content, surface free Li content, specific surface area, and moisture content, and the results are shown in Table 1.

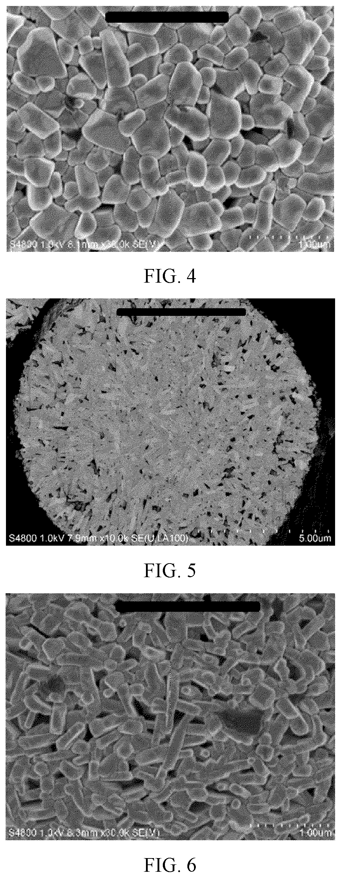

The SEM images of the cross-section and surface of the cathode material A9 prepared in Example 9 are shown in FIG. 3 and FIG. 4, respectively. It can be seen that the cathode material does not have a core-shell structure. Further, compared to the cathode material A1 of Example 1, the primary particles of the cathode material A9 have a smaller aspect ratio, a rounder particle morphology, a more compact arrangement between the primary particles of the inner core and the shell layer, smaller voids formed between the particles, and a lower porosity.

In the cathode material A9, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 10

Step (1) was the same as step (1) of Example 1.

(2) The cathode material precursor, lithium hydroxide, a first dopant (aluminum oxide and niobium oxide), and a second dopant (boric acid), in a molar ratio n(Me):n(Li):n(Al):n(Nb):n(B)=1:1.03:0.01:0.002:0.001, were respectively weighed, and mixed uniformly. The mixture was sintered in an oxygen furnace at a constant temperature, with an oxygen concentration of 99%, with the temperature rise rate of 5°C/min to 700°C from the room temperature, and the sintering duration was 12 h. After cooling, crushing, and sieving, the primary sintered material was obtained. The specific surface area of the primary sintered material was 0.48m²/g.

Step (3) was the same as Example 1, a cathode material A10 was obtained. The cathode material A10 included a matrix with a composition of Li_{1.03}(Ni_{0.967}Co_{0.01}Mn_{0.01}Al_{0.01} Nb_{0.002}B_{0.001})O₂, and a coating layer coated on the surface of the matrix and containing an oxide of B and/or a lithium oxide compound of B. The element B in the coating layer accounted for 0.15 wt% of the total mass of the cathode material.

The cathode material A10 were tested in terms of the surface Ni³⁺ content, internal Ni³⁺ content, disordering nickel content, surface free Li content, specific surface area, and moisture content, and the results are shown in Table 1.

The SEM images of the cross-section and surface of the cathode material A10 prepared in Example 10 are shown in FIG. 5 and FIG. 6, respectively. It can be seen that the cathode material A10 does not have a core-shell structure, and the entire material has a great porosity. Further, compared to the cathode material A1 of Example 1, the primary particles of the cathode material A10 are slender and have a greater aspect ratio, numerous pores are formed in a disordered arrangement between the primary particles, and the secondary particles formed have a greater specific surface.

In the cathode material A10, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 11

Step (1) was the same as step (1) of Example 1.

(2) The cathode material precursor, lithium hydroxide, a second dopant (boric acid), in a molar ratio n(Me):n(Li):n(B)=1:1.03:0.001, were respectively weighed, and mixed uniformly. The mixture was sintered in an oxygen furnace at a constant temperature, with an oxygen concentration of 99%, with the temperature rise rate of 5°C/min to 700°C from the room temperature, and the sintering duration was 12 h. After cooling, crushing, and sieving, the primary sintered material was obtained. The specific surface area of the primary sintered material was 0.51m²/g.

Step (3) was the same as Example 1, a cathode material A11 was obtained. The cathode material A11 included a matrix with a composition of Li_{1.03}(Ni_{0.979}C_{00.01}Mn_{0.01}B_{0.001})O₂, and a coating layer coated on the surface of the matrix and containing an oxide of B and/or a lithium oxide compound of B. The element B in the coating layer accounted for 0.15 wt% of the total mass of the cathode material.

The cathode material A11 were tested in terms of the surface Ni³⁺ content, internal Ni³⁺ content, disordering nickel content, surface free Li content, specific surface area, and moisture content, and the results are shown in Table 1.

In the cathode material A11, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Example 12

Step (1) was the same as step (1) of Example 1.

(2) The cathode material precursor, lithium hydroxide, a second dopant (boric acid), a third dopant (yttrium oxide), in a molar ratio n(Me):n(Li):n(B):n(Y) =1:1.03:0.001:0.002, were respectively weighed, and mixed uniformly. The mixture was sintered in an oxygen furnace at a constant temperature, with an oxygen concentration of 99%, with the temperature rise rate of 5°C/min to 700°C from the room temperature, and the sintering duration was 12 h. After cooling, crushing, and sieving, the primary sintered material was obtained. The specific surface area of the primary sintered material was 0.47m²/g.

Step (3) was the same as Example 1, a cathode material A12 was obtained. The cathode material A12 included a matrix with a composition of Li_{1.03}(Ni_{0.977}C_{00.01}Mn_{0.01}B_{0.001}Y_{0.002})O₂, and a coating layer coated on the surface of the matrix and containing an oxide of B and/or a lithium oxide compound of B. The element B in the coating layer accounted for 0.15 wt% of the total mass of the cathode material.

The cathode material A12 were tested in terms of the surface Ni³⁺ content, internal Ni³⁺ content, disordering nickel content, surface free Li content, specific surface area, and moisture content, and the results are shown in Table 1.

In the cathode material A12, the aspect ratio and porosity of the primary particle of the inner core, the aspect ratio and porosity of the primary particle of the shell layer, the aspect ratio and porosity of the primary particle of the cathode material, and the ratio of the radius of the inner core to the radius of the shell layer are shown in Table 2.

### Comparative Example 1

Step (1) and Step (2) were the same as Step (1) and Step (2) of Example 1.

(3) The primary sintered material was mixed in water at a solid-liquid ratio of 3:1, stirred and washed for 2 min, and then filtered and dried, to obtain the washed pretreated material. Element B in the coating agent boric acid I and the pre-treated material were added according to a mass ratio of m (B)/[m (BM)] = 0.15 wt%. The mixture was placed in a high-speed mixer to mix uniformly, and sintered in an oxygen furnace at a constant temperature of 350°C, with an oxygen concentration of 99% and a sintering duration of 10 h. After cooling, sieving, and iron removal, a cathode material D1 was obtained. The cathode material D1 included a matrix with a composition of Li_{1.03}(Ni_{0.965}Co_{0.01}Mn_{0.01}Al_{0.01}Nb_{0.002}B_{0.001}Y_{0.002})O₂, and a coating layer coated on the surface of the matrix and containing an oxide of B and/or a lithium oxide compound of B. The element B in the coating layer accounted for 0.15 wt% of the total mass of the cathode material.

The cathode material D1 were tested in terms of the surface Ni³⁺ content, internal Ni³⁺ content, disordering nickel content, surface free Li content, specific surface area, and moisture content, and the results are shown in Table 1.

In the cathode material D1, the aspect ratio and porosity of the primary particles of the inner core, the aspect ratio and porosity of the primary particles of the shell layer, the aspect ratio and porosity of the primary particles of the cathode material, and the ratio of the radius of the inner core to the radius of the shell layer are shown in Table 2.

### Comparative Example 2

Step (1) and Step (2) were the same as Step (1) and Step (2) of Example 9;

Step (3) was the same as step (3) of Comparative Example 1, a cathode material D2 was obtained. The cathode material D2 included a matrix with a composition of Li_{1.03}(Ni_{0.968}Co_{0.01}Mn_{0.01}Al_{0.01}Nb_{0.002})O₂, and a coating layer coated on the surface of the matrix and containing an oxide of B and/or a lithium oxide compound of B. The element B in the coating layer accounted for 0.15 wt% of the total mass of the cathode material.

The cathode material D2 were tested in terms of the surface Ni³⁺ content, internal Ni³⁺ content, disordering nickel content, surface free Li content, specific surface area, and moisture content, and the results are shown in Table 1.

In the cathode material D2, the aspect ratio and porosity of the primary particles of the inner core, the aspect ratio and porosity of the primary particles of the shell layer, the aspect ratio and porosity of the primary particles of the cathode material, and the ratio of the radius of the inner core to the radius of the shell layer are shown in Table 2.

### Comparative Example 3

Step (1) and Step (2) were the same as Step (1) and Step (2) of Example 1.

(3) Oxide was used to replace boric acid I. Element W in the tungsten oxide and the primary sintered material were mixed in a high-speed mixer according to a mass ratio of m(W)/[m(BM)] = 0.2 wt%. The mixture was sintered in an oxygen furnace at a constant temperature of 460°C, with an oxygen concentration of 50% and the remaining atmosphere was air. The sintering duration was 10 h. After cooling, sieving, and iron removal, a cathode material D3 was obtained. The cathode material D3 included a matrix with a composition of Li_{1.03}(Ni_{0.965}Co_{0.01}Mn_{0.01} Al_{0.01}Nb_{0.002}B_{0.001}Y_{0.002})O₂, and a coating layer containing an oxide of W and/or a lithium oxide compound of W coated on the surface of the matrix. The element W in the coating layer accounted for 0.2 wt% of the total mass of the cathode material.

The distribution coefficient K₉₀ of tungsten oxide was 1.51.

The cathode material D3 were tested in terms of the surface Ni³⁺ content, internal Ni³⁺ content, disordering nickel content, surface free Li content, specific surface area, and moisture content, and the results are shown in Table 1.

In the cathode material D3, the aspect ratio and porosity of the primary particles of the inner core, the aspect ratio and porosity of the primary particles of the shell layer, the aspect ratio and porosity of the primary particles of the cathode material, and the ratio of the radius of the inner core to the radius of the shell layer are shown in Table 2.

**[Table 1]**

| Item | | A1 | A2 | A3 | A4 | A5 | A6 | A7 | A8 |
|---|---|---|---|---|---|---|---|---|---|
| Valence distribution of surface element Ni (%) | +2 | 16 | 17 | 19 | 17 | 14 | 12 | 18 | 17 |
| | +3 | 84 | 83 | 81 | 83 | 86 | 88 | 82 | 83 |
| Valence distribution of internal element Ni (%) | +2 | 15 | 16 | 18 | 16 | 12 | 11 | 15 | 15 |
| | +3 | 85 | 84 | 82 | 84 | 88 | 89 | 85 | 85 |
| Ratio of surface Ni³⁺ to internal Ni³⁺ | | 0.99 | 0.99 | 0.99 | 0.99 | 0.98 | 0.99 | 0.98 | 0.97 |
| Content ratio of Ni³⁺ to Ni²⁺ | | 5.59 | 5.19 | 4.50 | 5.19 | 7.11 | 7.96 | 5.45 | 5.52 |
| Ratio of disordering Ni (%) | | 0.93 | 0.91 | 0.87 | 1.05 | 0.81 | 0.65 | 0.93 | 0.92 |
| Surface free Li (ppm) | | 3080 | 2890 | 2950 | 3100 | 2240 | 2090 | 3450 | 4630 |
| Proportion of surface free Li (%) | | 4.3 | 4 | 4.1 | 4.5 | 3.1 | 2.9 | 4.7 | 4.9 |
| Specific surface area (m²/g) | | 0.36 | 0.31 | 0.34 | 0.32 | 0.30 | 0.31 | 0.29 | 0.39 |
| Precise moisture (ppm) | | 62 | 71 | 65 | 62 | 53 | 51 | 50 | 48 |

**[Table 1 (continued)]**

| Item | | A9 | A10 | A11 | A12 | D1 | D2 | D3 |
|---|---|---|---|---|---|---|---|---|
| Valence distribution of surface element Ni (%) | +2 | 23 | 20 | 19 | 19 | 42 | 38 | 22 |
| | +3 | 77 | 80 | 81 | 81 | 57 | 62 | 78 |
| Valence distribution of internal element Ni (%) | +2 | 20 | 18 | 17 | 18 | 17 | 17 | 16 |
| | +3 | 80 | 82 | 83 | 82 | 83 | 83 | 84 |
| Ratio of surface Ni³⁺ to internal Ni³⁺ | | 0.96 | 0.98 | 0.98 | 0.99 | 0.69 | 0.75 | 0.93 |
| Content ratio of Ni³⁺ to Ni²⁺ | | 3.88 | 4.45 | 4.77 | 4.50 | 3.72 | 3.88 | 4.88 |
| Ratio of disordering Ni (%) | | 1.13 | 1.20 | 1.21 | 1.18 | 3.45 | 4.33 | 1.05 |
| Surface free Li (ppm) | | 2570 | 3310 | 3870 | 3460 | 1780 | 1690 | 7430 |
| Proportion of surface free Li (%) | | 3.5 | 4.6 | 5.4 | 4.8 | 2.4 | 2.3 | 7.8 |
| Specific surface area (m²/g) | | 0.13 | 0.41 | 0.43 | 0.41 | 0.55 | 0.60 | 0.33 |
| Precise moisture (ppm) | | 59 | 77 | 69 | 75 | 213 | 207 | 68 |

**[Table 2]**

| Item | | A1 | A2 | A3 | A4 | A5 | A6 | A7 | A8 |
|---|---|---|---|---|---|---|---|---|---|
| Aspect ratio of primary particle | Core | 1.4 | 1.8 | 1.5 | 1.3 | 1.7 | 1.6 | 1.3 | 1.4 |
| | Shell | 4.8 | 5.2 | 4.8 | 4.3 | 5.3 | 4.2 | 4.5 | 4.7 |
| | Entire | 4.0 | 4.4 | 4.0 | 3.6 | 4.4 | 3.6 | 3.7 | 3.9 |
| Porosity (%) | Core | 0.59 | 0.13 | 1.98 | 0.72 | 0.81 | 0.59 | 0.58 | 0.58 |
| | Shell | 6.30 | 5.26 | 5.02 | 6.21 | 5.30 | 6.30 | 5.70 | 6 |
| | Entire | 5.05 | 3.97 | 4.26 | 4.84 | 4.18 | 5.05 | 4.42 | 4.65 |
| Radius ratio of inner core to shell layer | | 0.67 | 0.8 | 0.74 | 0.59 | 0.67 | 1.31 | 1.08 | 0.67 |

**[Table 2 (continued)]**

| Item | | A9 | A10 | A11 | A12 | D1 | D2 | D3 |
|---|---|---|---|---|---|---|---|---|
| Aspect ratio of primary particle | Core | / | / | / | 1.8 | 1.4 | / | 1.3 |
| | Shell | / | / | / | 5.2 | 4.7 | / | 4.8 |
| | Entire | 1.3 | 3.5 | 3.5 | 4.4 | 3.9 | 1.3 | 3.9 |
| Porosity (%) | Core | / | / | / | 0.62 | 0.59 | / | 0.59 |
| | Shell | / | / | / | 6.88 | 6.75 | / | 6.30 |
| | Entire | 2.76 | 6.65 | 6.02 | 5.32 | 5.95 | 3.85 | 5.05 |
| Radius ratio of inner core to shell layer | | | / | / | 0.90 | 0.65 | / | 0.66 |

The cathode materials of examples and comparative examples were fractured under the conditions of 2.5 T, 3.5 T, and 4.5 T, respectively, and the specific surface area and particle size of the fractured cathode materials were tested. The changing rates of the specific surface area and particle size before and after the fracturing are shown in Table 3.

**[Table 3]**

| Item | | A1 | A2 | A3 | A4 | A5 | A6 | A7 | A8 |
|---|---|---|---|---|---|---|---|---|---|
| Changing rate under pressure of 2.5 T (%) | D₁₀ | 4.8 | 4.3 | 4.4 | 4.5 | 4.2 | 3.8 | 4.7 | 4.6 |
| | D₅₀ | 4.1 | 3.8 | 3.8 | 3.9 | 3.7 | 3.7 | 4.1 | 4.1 |
| | D₉₀ | 2.6 | 2.3 | 2.5 | 2.5 | 2.2 | 1.9 | 2.6 | 2.6 |
| Changing rate under pressure of 3.5 T (%) | D₁₀ | 17.8 | 16 | 16.8 | 16.7 | 13.5 | 12.2 | 17.7 | 17.4 |
| | D₅₀ | 8.9 | 8.1 | 8.9 | 8 | 5.4 | 5.1 | 8.1 | 7.8 |
| | D₉₀ | 6.2 | 5.4 | 6.2 | 5.7 | 3.3 | 3 | 5.6 | 5.5 |
| Changing rate under pressure of 4.5 T (%) | D₁₀ | 25.5 | 24 | 29.2 | 29 | 17.9 | 15.2 | 23.5 | 23.1 |
| | D₅₀ | 12.8 | 10.2 | 11.4 | 10.4 | 8.6 | 6.9 | 10.3 | 10.1 |
| | D₉₀ | 6.6 | 6 | 6.9 | 6.4 | 4.8 | 3.8 | 5.9 | 5.6 |
| Changing rate of SSA under pressure of 3.5 T (%) | | 38 | 35 | 40 | 41 | 32 | 30 | 39 | 39 |

**[Table 3 (continued)]**

| Item | | A9 | A10 | A11 | A12 | D1 | D2 | D3 |
|---|---|---|---|---|---|---|---|---|
| Changing rate under pressure of 2.5 T (%) | D₁₀ | 4.6 | 5.2 | 5.5 | 5.0 | 4.9 | 4.7 | 4.9 |
| | D₅₀ | 4.0 | 4.2 | 4.4 | 4.2 | 4.1 | 4.0 | 4.0 |
| | D₉₀ | 2.6 | 2.6 | 2.7 | 2.6 | 2.6 | 2.6 | 2.6 |
| Changing rate under pressure of 3.5 T (%) | D₁₀ | 16.5 | 19.9 | 23.1 | 18.1 | 18.2 | 16.8 | 17.9 |
| | D₅₀ | 7.9 | 10 | 12.0 | 9.6 | 9.2 | 7.9 | 9 |
| | D₉₀ | 5.5 | 6.9 | 7.3 | 6.5 | 6.4 | 5.5 | 6.2 |
| Changing rate under pressure of 4.5 T (%) | D₁₀ | 23.3 | 34.6 | 40.2 | 30.2 | 27.8 | 24.7 | 26.4 |
| | D₅₀ | 10.2 | 15.6 | 18.8 | 14.4 | 13.5 | 10.8 | 12.9 |
| | D₉₀ | 5.8 | 9.8 | 11.3 | 7.8 | 6.8 | 5.8 | 6.7 |
| Changing rate of SSA under pressure of 3.5 T (%) | | 33 | 65 | 69 | 54 | 42 | 38 | 40 |

The cathode materials were assembled into 2025 button batteries, and the electrochemical performances of the batteries were tested. The results are shown in Table 4.

**[Table 4]**

| Item | First cycle specific discharge capacity (0.1 C/mAh/g) | First cycle charge/discharge efficiency (%) | Specific discharge capacity (1.0 C/mAh/g) | 1 C/0.1 C (%) | Capacity retention after 80 cycles at 45°C & 4.3 V (%) |
|---|---|---|---|---|---|
| A1 | 238.5 | 93.3 | 212.5 | 89.1 | 89.4 |
| A2 | 236.5 | 93.4 | 210.5 | 89 | 90.1 |
| A3 | 236.6 | 93.5 | 208.7 | 88.2 | 87.7 |
| A4 | 237.9 | 93.2 | 211.4 | 88.8 | 91.5 |
| A5 | 215.5 | 93.3 | 197.4 | 91.6 | 96.8 |
| A6 | 185.7 | 92.7 | 171.6 | 92.4 | 99.9 |
| A7 | 236.8 | 92.6 | 207.9 | 87.8 | 85.5 |
| A8 | 235.4 | 92.4 | 210.2 | 89.2 | 89.7 |
| A9 | 231.4 | 92.5 | 203.2 | 87.8 | 83.6 |
| A10 | 238.2 | 93.1 | 211 | 88.6 | 85.2 |
| A11 | 239 | 93.9 | 215.0 | 90 | 80.8 |
| A12 | 238.9 | 93.5 | 215.1 | 90 | 82.2 |
| D1 | 220.8 | 91.2 | 192.8 | 87.3 | 84.7 |
| D2 | 209.7 | 90.5 | 179.3 | 85.5 | 79.4 |
| D3 | 224.6 | 91.8 | 194.4 | 86.6 | 80.2 |

Table 1 to Table 4 reveal that: in Example 1 to Example 10 according to the present disclosure, by controlling the concentration of oxygen in the oxygen-containing atmosphere during the coating process through the dry coating method, the prepared cathode material has similar surface and internal Ni³⁺ contents and a low content of disordering nickel. Thus, the generation of a NiO passivation layer in the cathode material can be avoided, and the phenomenon of loss of surface-active lithium can be reduced. In this way, a lithium-ion battery including the cathode material can have improved capacity, rate capacity, and cycle performance.

In contrast, in Comparative Example 1 and Comparative Example 2, the primary sintered material was coated by using a wet coating process and thus subjected to water washing. Thus, the active lithium such as lithium carbonate and lithium hydroxide on the surface of the cathode material was washed away, and a part of the active Ni³⁺ ions was converted into Ni⁴⁺ ions and then decomposed and converted into Ni²⁺. In this way, the ratio of surface Ni³⁺ content on to internal Ni³⁺ content decreases, the content of disordering nickel increases, and the NiO passivation layer was formed on the surface of the cathode material, thereby finally resulting in the deterioration of the capacity, rate capacity, and cycle performance of a lithium-ion battery prepared from the cathode material.

Further, in the cathode materials prepared in Example 1 to Example 8 according to the present disclosure, a specific core-shell structure was formed in the cathode material by selecting the specific doping element. Specifically, the inner core and the shell layer have different porosities; the primary particles of the inner core have a small aspect ratio; and the primary particles of the shell layer have a great aspect ratio and are arranged in a radial pattern. The specific core-shell structure as described above can improve the particle strength of the cathode material, while the cathode material is ensured to be in full contact with the electrolyte. The primary particles of the shell layer are arranged in a radial pattern, which is conducive to releasing and alleviating the extrusion and cracks caused by the expansion and contraction of grains with different crystal plane orientations in different directions, and the lower grain boundary density of the shell layer can reduce the generation and development of micro-cracks at grain boundaries, thereby improving the charge and discharge cycle performance and prolonging the service life of the lithium-ion battery including the cathode material.

The doping ratio of the third doping element in Example 2 was higher than that in Example 1. In this regard, the porosity of the inner core, the porosity of the shell layer, and the porosity of the entire cathode material are all reduced; the primary particles in the core and the shell are arranged more densely; the primary particles in the shell layer are in a more ordered radial arrangement and have a greater aspect ratio; the cathode material has a smaller specific surface area; the cathode material has better particle strength; and the lithium-ion battery including the cathode material has better cycle performance.

Based on Example 1 and Example 3 to Example 4, it can be seen that the cathode materials containing different doping elements can have similar structural effects as Example 1, and thus the electrochemical performances of lithium-ion batteries can also be improved.

Based on Example 1 and Examples 5 to 6, the preparation method provided by the present disclosure can be applied to different types of precursor materials, and the cathode materials prepared with different types of precursor materials can improve the electrochemical performances of lithium-ion batteries.

As can be seen from Example 1 and Example 7, better results can be obtained by selecting coating agents with different particle sizes, in particular, by selecting coating agents with the preferred particle size distribution of the present disclosure.

As can be seen from Example 1 and Example 8, the coating agent containing different elements can be selected and coated on the matrix material by means of the dry coating system of the present disclosure, and the material has a high trivalent Ni content, thereby forming a finished cathode material with improved effects.

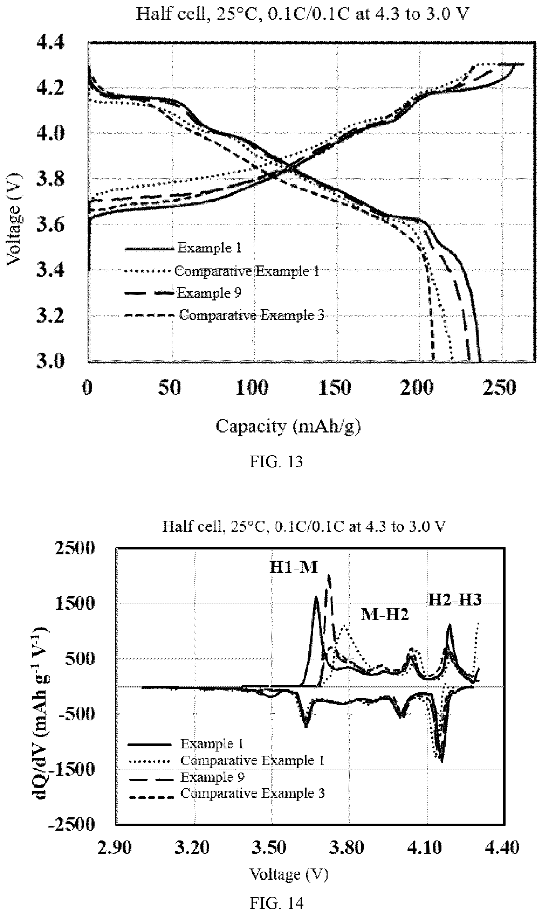

FIG. 13 is a graph of a comparison of the first cycle discharge capacity of Example 1, Example 9, Comparative Example 1, and Comparative Example 3. FIG. 14 is a graph of a comparison of dQ/dV of Example 1, Example 9, Comparative Example 1, and Comparative Example 3. FIG. 13 and FIG. 14 reveal that the lithium-ion battery including the cathode material of the present disclosure has a low voltage corresponding to charge, a low charge-discharge polarization, and the excellent rate capacity and first cycle discharge capacity.

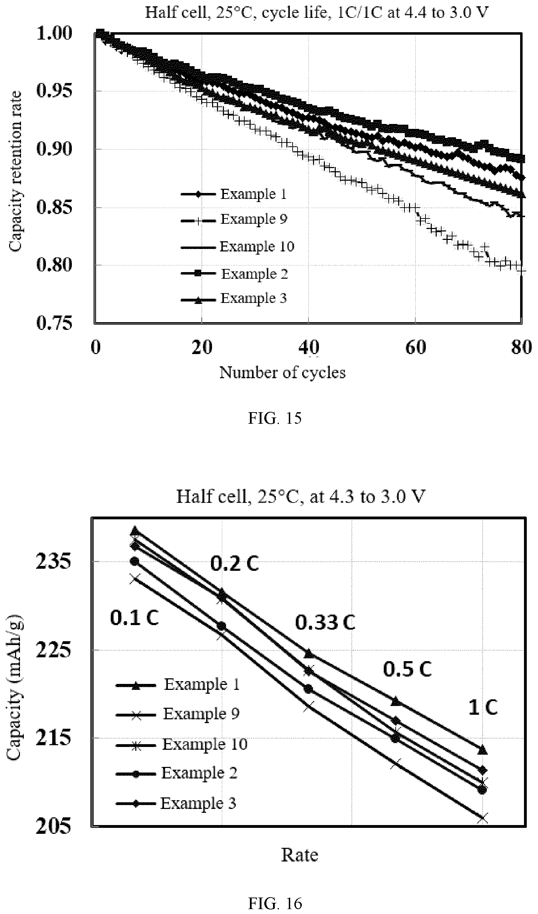

FIG. 15 is a graph of a comparison of the rate capacity of Example 1, Example 9, Example 10, and Examples 2 and 3. FIG. 16 is a graph of a comparison of the cycle performance of Example 1, Example 9, Example 10, and Examples 2 and 3. FIG. 15 and FIG. 16 reveal that the lithium-ion batteries containing the cathode material with the core-shell structure have excellent cycle performance and rate capacity than those of Example 9 and Example 10 without the core-shell structure.

Although preferred embodiments of the present disclosure are described in detail above, the present disclosure is not limited thereto. Without departing from the technical concept of the present disclosure, various simple modifications, including combinations of various technical features in any suitable manner, can be made to the technical solutions of the present disclosure. These simple modifications and combinations should also be regarded as the content disclosed by the present disclosure and fall within the scope of protection of the present disclosure.

## Claims

1. A lithium-ion battery cathode material, wherein:
a ratio of surface Ni³⁺ content of the cathode material to internal Ni³⁺ content of the cathode material is (0.95 to 1): 1; and
a content of disordering nickel in the cathode material is less than or equal to 3%.

2. The lithium-ion battery cathode material according to claim 1, wherein:
the ratio of the surface Ni³⁺ content of the cathode material to the internal Ni³⁺ content of the cathode material is (0.97 to 0.99): 1;
the content of the disordering nickel in the cathode material is less than or equal to 1.5%;
preferably, in the cathode material, a ratio of a Ni³⁺ content to a Ni²⁺ content is greater than or equal to 2, preferably, ranging from 3 to 8.

3. The lithium-ion battery cathode material according to claim 1 or 2, wherein:
a specific surface area S₀ of the cathode material ranges from 0.1 m²/g to 0.5 m²/g, preferably, from 0.1 m²/g to 0.45 m²/g;
preferably, a specific surface area S₁ of the cathode material fractured under a pressure of 3.5 T satisfies that (S₁-S₀)/S₀ × 100% ranges from 0% to 50%, and preferably, from 20% to 50%;
preferably, a particle size D₁₀⁰, obtained by a particle size test, corresponding to 10% of a volume distribution of the cathode material and a particle size D₁₀¹, obtained by a particle size test, corresponding to 10% of a volume distribution of the cathode material fractured under a pressure of 3.5 T satisfy that (D₁₀⁰-D₁₀¹)/D₁₀⁰ × 100% ranges from 0% to 30%, and preferably, from 0% to 20%;
preferably, a particle size D₅₀⁰, obtained by a particle size test, corresponding to 50% of the volume distribution of the cathode material and a particle size D₅₀¹, obtained by a particle size test, corresponding to 50% of the volume distribution of the cathode material fractured under a pressure of 3.5 T satisfy that (D₅₀⁰-D₅₀¹)/D₅₀⁰ × 100% ranges from 0% to 15%, and preferably, from 0% to 10%;
preferably, a particle size D₉₀⁰, obtained by a particle size test, corresponding to 90% of the volume distribution of the cathode material and a particle size D₉₀⁰, obtained by a particle size test, corresponding to 90% of the volume distribution of the cathode material fractured under a pressure of 3.5 T satisfy that (D₉₀⁰-D₉₀^{3.5})/D₉₀⁰ × 100% ranges from 0% to 8%, and preferably, from 0% to 7%; and
preferably, the cathode material has a porosity ranging from 0% to 8%.

4. The lithium-ion battery cathode material according to any one of claims 1 to 3, wherein:
the cathode material is secondary particles having a core-shell structure;
preferably, in the cathode material, a porosity of an inner core ranges from 0.1% to 2%;
preferably, in the cathode material, a porosity of a shell layer ranges from 3% to 8%;
preferably, in the cathode material, a ratio of a radius of the inner core to a radius of a shell layer is (0.5 to 9): 1, and preferably, from (0.5 to 3): 1;
preferably, in the cathode material, primary particles of the inner core have an aspect ratio of (1 to 2): 1;
preferably, in the cathode material, primary particles of the shell layer have an aspect ratio of (3 to 7): 1; and
preferably, primary particles of the cathode material have an aspect ratio of (1 to 6): 1.

5. The lithium-ion battery cathode material according to any one of claims 1 to 4, comprising:
a matrix; and
a coating layer coated on the matrix, wherein:
the coating layer comprises a lithium oxide compound containing element J and/or an oxide containing element J;
the matrix has a composition represented by Formula I:
Li₁₊ₐ₁(NiₓCo_{y}Mn_{z}Mₘ)O₂ Formula I,
where: -0.1≤a₁≤0.2, 0<x<1, 0≤y≤0.4, 0<z≤0.6, 0≤m≤0.1; M is selected from at least one of Ta, Cr, Mo, W, Al, Y, Ti, Zr, V, Nb, Ca, P, Co, Ce, Er, Mg, B, Sr, Ba, and La; J is selected from at least one of Zr, V, B, Al, Sr, Co, W, Mo, and Mn;
preferably, -0.1≤a₁≤0.15, 0<x<0.99, 0<y≤0.3, 0<z≤0.4, 0<m≤0.05; M is selected from at least one of Ti, B, La, P, and W, and optionally at least one of Al, Nb, Cr, V, Mg, Sr, Y, Ce, Ca, V, Ta, Co, Zr, and Mo; J is selected from at least one of Zr, V, B, Al, Sr, Co, W, Mo, and Mn;
preferably, the element J in the coating layer accounts for 0.05 wt% to 1.5 wt%, preferably 0.05 wt% to 1 wt%, of a total mass of the cathode material.

6. The lithium-ion battery cathode material according to any one of claims 1 to 5, wherein:
in the cathode material, surface free Li accounts for 3% to 6% of a molar ratio of total element Li; and
preferably, the cathode material has a moisture content ranging from 0 ppm to 100 ppm.

7. A method for preparing a lithium-ion battery cathode material, comprising:
S1, mixing a cathode material precursor, a lithium source, and optionally a dopant, performing primary sintering under a first oxygen-containing atmosphere, and performing cooling, crushing, and sieving, to obtain a primary sintered material; and
S2, mixing the primary sintered material with a coating agent, performing secondary sintering under a second oxygen-containing atmosphere, and performing sieving and iron removing, to obtain the lithium-ion battery cathode material, wherein:
the second oxygen-containing atmosphere has an oxygen concentration greater than or equal to 90 vol%.

8. The method according to claim 7, wherein:
in step S1, the dopant is a compound containing a doping element M, wherein the doping element M is selected from at least one of Ta, Cr, Mo, W, Al, Y, Ti, Zr, V, Nb, Ca, P, Co, Ce, Er, Mg, B, Sr, Ba, and La;
preferably, the first oxygen-containing atmosphere has an oxygen concentration greater than or equal to 95 vol%;
preferably, the primary sintering comprises: rising a temperature from the room temperature to a range of 600°C to 900°C with a heating rate of 2°C/min to 8°C/min, and sintering for 8 hours to 14 hours;
preferably, in step S2, the coating agent is a compound containing a coating element J, wherein the coating element J is selected from at least one of Zr, V, B, Al, Sr, Co, W, Mo, and Mn; and
preferably, conditions of the secondary sintering comprise: a sintering temperature ranging from 200°C to 600°C, and a sintering duration ranging from 8 hours to 14 hours.

9. The method according to claim 7 or 8, wherein:
in step S1, an addition amount of the lithium source is based on a stoichiometric ratio of 0.9≤n(Li)/n(Me)≤1.2, where n(Me) is a total molar amount of the metal elements in the cathode material precursor;
preferably, in step S1, an addition amount of the dopant is based on a stoichiometric ratio of 0≤n(M)/n(Me)≤0.1, where n(Me) is the total molar amount of the metal elements in the cathode material precursor;
preferably, in step S2, an addition amount of the coating agent is based on a mass ratio of 0.05 wt%≤m(J)/[m(BM)]≤1.5 wt%, where m(J) is a mass of the element J in the coating agent, and where m(BM) is a mass of the primary sintered material of the cathode material.

10. The method according to any one of claims 7 to 9, wherein in step S1, the dopant comprises at least one of a first dopant, a second dopant, and a third dopant, wherein:
the first dopant is a compound containing a doping element M₁, the doping element M₁ being selected from at least one of Al, Nb, Cr, V, Mg, and Sr; the second dopant is a compound containing a doping element M₂, the doping element M₂ being selected from at least one of Ti, B, La, P, and W; and the third dopant is a compound containing a doping element M₃, the doping element M₃ being selected from at least one of Y, Ce, Ca, V, Ta, Co, Zr, and Mo;
preferably, in step S1, an addition amount of the first dopant is based on a stoichiometric ratio of 0≤n(M₁)/n(Me)≤0.1, wherein n(Me) is the total molar amount of the metal elements in the cathode material precursor;
preferably, in step S1, an addition amount of the second dopant is based on a stoichiometric ratio of 0≤n(M₂)/n(Me)≤0.1, where n(Me) is the total molar amount of the metal elements in the cathode material precursor;
preferably, in step S1, an addition amount of the third dopant is based on a stoichiometric ratio of 0≤n(M₃)/n(Me)≤0.1, where n(Me) is the total molar amount of the metal elements in the cathode material precursor;
preferably, the primary sintered material has a specific surface area ranging from 0.15 m²/g to 0.8 m²/g;
preferably, in step S2, a particle size D₁₀ corresponding to 10% of a volume distribution of the coating agent, a particle size D₅₀ corresponding to 50% of the volume distribution of the coating agent, and a particle size D₉₀ corresponding to 90% of the volume distribution of the coating agent satisfy 1.5≤K₉₀=(D₉₀-D₁₀)/D₅₀≤2.8, the particle size D₁₀, the particle size D₅₀, and the particle size D₉₀ being obtained by a particle size test;
preferably, when the coating agent is a compound containing coating element B, the coating agent has D₁₀ ranging from 5 µm to 15 µm, D₅₀ ranging from 30 µm to 40 µm, and D₉₀ ranging from 80 µm to 90 µm.

11. The method according to any one of claims 7 to 10, wherein:
the cathode material precursor is prepared by the following steps: preparing a mixed salt solution of nickel salt, cobalt salt, and manganese salt; introducing the mixed salt solution, a precipitant solution, and a complexing agent solution into a reaction kettle; performing co-precipitation reaction in an inert gas; and performing aging, washing, and drying, to obtain the cathode material precursor;
preferably, a concentration of the mixed salt solution ranges from 1 mol/L to 3 mol/L;
preferably, a concentration of the precipitant solution ranges from 7 mol/L to 10 mol/L;
preferably, a concentration of the complexing agent solution is greater than or equal to 5 mol/L; and
preferably, conditions of the co-precipitation reaction comprise: a pH ranging from 10.5 to 11.5, a stirring speed ranging from 200 rpm 800 rpm, a reaction temperature ranging from 50°C to 80°C, and the mixed salt solution being introduced into the reaction kettle at a speed of 100 mL/h to 400 mL/h.

12. A lithium-ion battery cathode material prepared by the method according to any one of claims 7 to 11.

13. A lithium-ion battery, comprising the lithium-ion battery cathode material according to any one of claims 1 to 6 and 12.
